# EUROPEAN PATENT APPLICATION

(11) **EP 4 148 848 A1**
(43) Date of publication of application: **15.03.2023**
(21) Application number: 21196134.7
(22) Date of filing: 10.09.2021
(51) Int. Cl.: H01M 10/05, G01M 3/00, G01N 27/00, H01M 10/42, H01M 50/10, H01M 50/20, H01J 49/00, H01M 10/48

(54) **METHOD AND APPARATUS FOR DETECTING ONE OR MORE LEAKS IN A BATTERY ENCLOSURE OF A BATTERY**

(71) Applicant: Tofwerk AG, 3645 Thun (CH)
(72) Inventor: GONIN, Marc, 3600 Thun (CH)
(74) Representative: Keller Schneider Patent- und Markenanwälte AG

(57) **Abstract**

The invention relates to a method for detecting one or more leaks in a battery enclosure (101) of a battery (100), the battery (100) including at least one electrochemical cell (102) enclosed in the battery enclosure (101), or detecting one or more leaks in the at least one electrochemical cell (102) being in the battery enclosure (101) or separate from the battery enclosure (101). The method comprises the steps of obtaining gas, in particular air, from a surrounding of the battery (100) or from a surrounding of the at least one electrochemical cell (102) being in the battery enclosure (101) or separate from the battery enclosure (101), respectively, obtaining an analysis of the gas by analysing the gas with an analysis method and determining on the basis of the analysis whether the gas includes a signature of at least one constituent part of the at least one electrochemical cell (102), the signature indicating a presence of the at least one constituent part of the at least one electrochemical cell (102) in the gas. In case it is determined on the basis of the analysis that the gas includes the signature of the at least one constituent part of the at least one electrochemical cell (102), a leak in the battery enclosure (102) of the battery (100) or in the at least one electrochemical cell (102) being in the battery enclosure (101) or separate from the battery enclosure (101), respectively, is detected. In the analysis method, the gas is ionised by an ionisation source (31) with an ionisation method to ions and the ions are analysed in an analyser (32) by being separated according to one or more physical properties, wherein the ionisation source (31) is a chemical ionisation source and the ionisation method is a chemical ionisation method. The invention further relates to an apparatus (1) for detecting one or more leaks in a battery enclosure (101) of a battery (100) with the method according to the invention.

## Description

### Technical Field

The invention relates to a method for detecting one or more leaks in a battery enclosure of a battery, the battery including at least one electrochemical cell enclosed in the battery enclosure or detecting one or more leaks in the at least one electrochemical cell being in the battery enclosure or separate from the battery enclosure. Furthermore, the invention relates to an apparatus for detecting one or more leaks in a battery enclosure of a battery, the battery including at least one electrochemical cell enclosed in the battery enclosure, or detecting one or more leaks in the at least one electrochemical cell being in the battery enclosure or separate from the battery enclosure with the method according to the invention, the battery including at least one electrochemical cell enclosed in the battery enclosure.

### Background Art

Methods and apparatuses pertaining to the technical field initially mentioned are known. DE 10 2014 222 786 A1 of Bayerische Motoren Werke Aktiengesellschaft for example relates to a method and an apparatus for testing the tightness of at least one electrochemical storage device in the form of a battery. This apparatus comprises a housing in which at least one battery can be disposed and through which a gas flow can flow. Furthermore, the apparatus comprises a first gas sensor and a second gas sensor, wherein with both sensors, constituent parts of the electrochemical cell of the battery can be detected. The first gas sensor is arranged in the gas flow upstream of the battery and is capable of generating a first sensor signal. The second gas sensor is arranged in the gas flow downstream of the battery and is capable of generating a second sensor signal. The apparatus further comprises an evaluation device which is coupled to the first gas sensor and the second gas sensor and which is set up to evaluate the first sensor signal and the second sensor signal and to generate an error signal as a function of the evaluation. Thus, due to the arrangement of the first gas sensor upstream of the battery and the second gas sensor downstream of the battery, leakage of the battery can be detected while the signal components in the sensor signals that are not due to leakage of the battery enclosure can be eliminated.

Such methods and apparatuses have the disadvantage that the testing of the battery for leaks in the battery enclosure takes a long time because the battery has to be placed in the apparatus for the testing, whereafter the housing of the apparatus has to be purged with gas before the testing can start, while after the testing, the battery has to be removed from the apparatus.

### Summary of the invention

It is the object of the invention to create a method and an apparatus pertaining to the technical field initially mentioned, that enable a fast and yet reliable detection of one or more leaks in a battery enclosure of a battery, the battery including at least one electrochemical cell enclosed in the battery enclosure, or detecting one or more leaks in the at least one electrochemical cell being in the battery enclosure or separate from the battery enclosure.

The solution of the invention is specified by the features of claim 1. According to the invention, the method comprises the steps of obtaining gas, in particular air, from a surrounding of the battery or from a surrounding of the at least one electrochemical cell being in the battery enclosure or separate from the battery enclosure, respectively, obtaining an analysis of the gas by analysing the gas with an analysis method and determining on the basis of the analysis whether the gas includes a signature of at least one constituent part of the at least one electrochemical cell, the signature indicating a presence of the at least one constituent part of the at least one electrochemical cell in the gas. Thereby, in case it is determined on the basis of the analysis that the gas includes the signature of the at least one constituent part of the at least one electrochemical cell, a leak in the battery enclosure of the battery or in the at least one electrochemical cell being in the battery enclosure or separate from the battery enclosure, respectively, is detected, in the analysis method, the gas is ionised by an ionisation source with an ionisation method to ions and the ions are analysed in an analyser by being separated according to one or more physical properties, wherein the ionisation source is a chemical ionisation source and the ionisation method is a chemical ionisation method.

The apparatus according to the invention includes a gas obtaining unit for obtaining gas, in particular air, from a surrounding of the battery or a surrounding of the at least one electrochemical cell being in the battery enclosure or separate from the battery enclosure, respectively, and an analysing entity for obtaining an analysis of the gas by analysing the gas with an analysis method. The analysing entity includes an ionisation source for ionising the gas to ions with an ionisation method, wherein the ionisation source is a chemical ionisation source and the ionisation method is a chemical ionisation method, wherein the ionisation source is fluidly coupled to the gas obtaining unit for receiving the gas obtained with the gas obtaining unit from the surrounding of the battery or the surrounding of the at least one electrochemical cell being in the battery enclosure or separate from the battery enclosure for ionising the gas to the ions. Furthermore, the analysing entity includes an analyser for analysing the ions by separating the ions according to one or more physical properties, wherein the analyser is fluidly coupled to the ionisation source for receiving the ions from the ionisation source for separating the ions according to the one or more physical properties. Thereby, in the analysis method, the gas is ionised by the ionisation source with the ionisation method to the ions and the ions are analysed in the analyser by being separated according to the one or more physical properties. Furthermore, the apparatus includes a leak determination unit adapted for determining on the basis of the analysis whether the gas includes a signature of at least one constituent part of the at least one electrochemical cell, the signature indicating a presence of the at least one constituent part of the at least one electrochemical cell in the gas, wherein in case it is determined by the leak determination unit on the basis of the analysis that the gas includes the signature of the at least one constituent part of the at least one electrochemical cell, a leak in the battery enclosure of the battery or in the at least one electrochemical cell being in the battery enclosure separate from the battery enclosure is detected.

Advantageously the apparatus includes a control unit adapted for controlling the apparatus for executing the method according to the invention. This control unit may for example be an electronic controller or a desktop computer. Since in the latter case, the apparatus may be sold without desktop computer which can be connected to the apparatus and on which a software for controlling the apparatus can be run, the apparatus may as well go without control unit adapted for controlling the apparatus for executing the method according to the invention.

As initially mentioned, the method and apparatus are for detecting one or more leaks in a battery. In this case, the battery includes at least one electrochemical cell enclosed in the battery enclosure. Thereby, the aim is to detect leaks in the battery enclosure of the battery when at least one electrochemical cell enclosed in the battery enclosure. The method and apparatus are however as well for detecting one or more leaks in the at least one electrochemical cell being in the battery enclosure or separate from the battery enclosure. In this case, the aim is to detect leaks in the electrochemical cell. Independent of whether the aim is to detect leaks in the battery enclosure of the battery when at least one electrochemical cell enclosed in the battery enclosure or whether the aim is to detect leaks in the electrochemical cell, the electrochemical cell is advantageously a device capable of generating electrical energy from chemical reactions. In case the battery for which the electrochemical cell is used is rechargeable however, the electrochemical cell is as well capable of using electrical energy to cause chemical reactions.

According to the invention, in case the method and apparatus are for detecting one or more leaks in a battery, the method comprises the step of obtaining gas, in particular air, from a surrounding of the battery, while the apparatus includes a gas obtaining unit for obtaining gas, in particular air, from the surrounding of the battery. In case the method and apparatus are for detecting one or more leaks in at least one electrochemical cell being in the battery enclosure or separate from the battery enclosure however, the method comprises the step of obtaining gas, in particular air, from a surrounding of the at least one electrochemical cell being in the battery enclosure or separate from the battery enclosure, while the apparatus includes a gas obtaining unit for obtaining gas, in particular air, from the surrounding of the at least one electrochemical cell being in the battery enclosure or separate from the battery enclosure.

The gas is advantageously air. However, the gas may not be air, too. For example, the gas may be nitrogen gas or helium gas containing traces of other substances. Advantageously, however, the gas is a clean gas or clean air, respectively. Independent of whether the gas is air or not, in the method, the gas is advantageously obtained from the surrounding of the battery or from the surrounding of the at least one electrochemical cell with the gas obtaining unit. In case the gas obtaining unit is used for obtaining the gas from the surrounding of the battery, the gas is preferably obtained from the surrounding of the battery enclosure. Thereby, in case the battery enclosure provides one or more leaks, the gas or air, respectively, includes constituent parts of the at least one electrochemical cell escaping the battery enclosure through the one or more leaks. Thus, by detecting the signature of the at least one constituent part of the at least one electrochemical cell in the gas or air, respectively, the detection of leaks in the battery enclosure is enabled. In case the gas obtaining unit is used for obtaining the gas from the surrounding of the at least one electrochemical cell, the gas is preferably obtained from the surrounding of the at least one electrochemical cell within the battery enclosure in case the at least one electrochemical cell is in the battery enclosure or just from the surrounding of the at least one electrochemical cell in case the at least one electrochemical cell is separate from the battery enclosure. Thus, in either case by detecting the signature of the at least one constituent part of the at least one electrochemical cell in the gas or air, respectively, the detection of leaks in the at least one electrochemical cell is enabled.

How the gas from the surrounding of the battery or from the surrounding of the at least one electrochemical cell is obtained, is irrelevant. For example, the gas obtaining unit may be an open end of a tube which is moved along a surface of the battery or the at least one electrochemical cell, sucking in air from the surface of the battery or the at least one electrochemical cell. In another example, the surrounding of the battery or the surrounding of the electrochemical cell is purged in a purging gas and this purging gas is sucked into the gas obtaining unit from the surface of the battery or the at least one electrochemical cell. In yet another example, the battery is put into a housing or the at least one electrochemical cell is put into the housing, respectively, whereafter, the gas from the housing is sucked into the gas obtaining unit.

According to the invention, an analysis of the gas is obtained by analysing the gas with an analysis method and it is determined on the basis of the analysis whether the gas includes a signature of at least one constituent part of the at least one electrochemical cell, the signature indicating a presence of the at least one constituent part of the at least one electrochemical cell in the gas. The signature of the at least one constituent part of the at least one electrochemical cell is thus an indicator for the presence of the at least one constituent part of the at least one electrochemical cell in the gas. The reason is that the at least one constituent part of the at least one electrochemical cell ionised under the reaction conditions in the ionisation source during execution of the ionisation method provides a particular value of the at least one or more physical properties when being analysed in the analyser by being separated according to the one or more physical properties. Thus, in case at least traces of the at least one constituent part of the at least one electrochemical cell are present in the gas or air, respectively, when the gas is analysed with the analysis method, a fraction of the ions obtained from the gas have the particular value of the one or more physical properties. Consequently, in case a fraction of the ions obtained from the gas have the particular value of the at least one physical property, the gas includes a signature of the at least one constituent part of the at least one electrochemical cell. Therefore, the signature of the at least one constituent part of the at least one electrochemical cell in the gas indicates a leak in the battery enclosure. This is used in the method and in the apparatus according to the invention for detecting the one or more leaks in the enclosure of the battery.

Depending on the investigated at least one constituent part of the at least one electrochemical cell, other ions obtained from the gas or air, respectively, may have the same value of the one or more physical properties, too. In this case, the fraction of the ions having the same value of the one or more physical properties as ions obtained with the ionisation method under the ionisation conditions in the ionisation source from the at least one constituent parts of the at least one electrochemical cell have is above an expected value whenever the battery enclosure has a leak through which the at least one constituent part of the at least one electrochemical cell can escape from the battery enclosure to the surrounding of the battery. Thereby, it is irrelevant whether the at least one constituent part of the at least one electrochemical cell is present in the gas or air, respectively, in a gaseous form, in a liquid form, in solid form, or in a mixed from of gaseous, liquid and/or solid parts. In particular, the at least one constituent part of the at least one electrochemical cell may be present in the gas in a gaseous form or in the form of liquid aerosol particles and/or solid aerosol particles dispersed in the gas. Thus, the gas may be a dispersion, wherein when being ionised with the ionisation method, the dispersion including the liquid aerosol particles and/or solid aerosol particles is ionised.

According to the invention, the ionisation source is a chemical ionisation source and the ionisation method is a chemical ionisation method. In chemical ionisation, the ionisation of the gas is effected by known primary ions reacting chemically with the components of the gas to products providing the charges of the primary ions. The use of this mechanism has the advantage that the primary ions can be chosen to predominantly react with the at least one constituent part of the electrochemical cell to products while reacting much less to products with the main components of the gas. Consequently, even though the gas may only contain traces of the at least one constituent part of the electrochemical cell in case the battery enclosure or the at least one electrochemical cell provides a leak, the ions obtained from the gas contain a larger fraction of ionised constituent parts of the at least one electrochemical cell than the fraction of the at least one constituent part of the at least one electrochemical cell in the gas. Thus, when analysing the ions obtained from the gas in the analyser by separating the ions according to one or more physical properties, a much lower minimal detection ability is required for determining the signature of the at least one constituent part of the at least one electrochemical cell in the gas. Therefore, a fast and yet reliable detection of one or more leaks in a battery enclosure of a battery, the battery including at least one electrochemical cell enclosed in the battery enclosure, or of one or more leaks in the at least one electrochemical cell being in the battery enclosure or separate from the battery enclosure, is enabled by the solution according to the invention.

The method and the apparatus according to the invention can be used in in the production of batteries or the production of electrochemical cells. Furthermore, they can be used in development of batteries and electrochemical cells and for live cycle testing of batteries and of electrochemical cells. Thereby, individual electrochemical cells can be examined for leaks, or modules of electrochemical cells can be examined for leaks. Also, individual batteries or arrangements of batteries can be examined for leaks.

In chemical ionisation, the primary ions reacting chemically with the components of the gas to products providing the charges of the primary ions commonly runs in a reaction volume of the ionisation source. However, this chemical reaction may as well run elsewhere.

Preferably, for determining on the basis of the analysis whether the gas includes the signature of the at least one constituent part of the at least one electrochemical cell, it is assessed whether a fraction of the ions have a same value of the one or more physical properties as ions obtained under the reaction conditions in the ionisation source, in particular in the reaction volume of the ionisation source, during execution of the ionisation method from the at least one constituent parts of the at least one electrochemical cell have, wherein in case the fraction exceeds a threshold value, it is determined that the gas includes the signature of the at least one constituent part of the at least one electrochemical cell. Thus, the fact is used that the at least one constituent part of the at least one electrochemical cell ionised under the reaction conditions in the ionisation source, in particular in the reaction volume of the ionisation source, during execution of the ionisation method provides a particular value of the at least one or more physical properties when being analysed in the analyser by being separated according to the one or more physical properties. Thereby, in case at least traces of the at least one constituent part of the at least one electrochemical cell are present in the gas when the gas is analysed with the analysis method, a fraction of the ions obtained from the gas have the particular value of the one or more physical properties. In case the fraction of the ions obtained from the gas have the particular value of the at least one physical property and this fraction exceeds the threshold value, the gas includes a signature of the at least one constituent part of the at least one electrochemical cell and it is determined that the gas includes the signature of the at least one constituent part of the at least one electrochemical cell.

Since there may be marginal traces of the at least one constituent part of the at least one electrochemical cell present in the gas even though there is no leak in the battery enclosure and since other ions obtained from the gas may have the same value of the one or more physical properties, too, the application of the threshold value has the advantage that the reliability of the detection of the one or more leaks in the battery enclosure of the battery can be increased by choosing a corresponding threshold value.

Alternatively, however, determining on the basis of the analysis whether the gas includes the signature of the at least one constituent part of the at least one electrochemical cell may go without the application of such a threshold value.

Advantageously, the ionisation source and the ionisation method rely on adduct ionisation where adduct ions are formed during ionisation of the gas, the adduct ions being adducts of the gas and reactant ions. This has the advantage that the gas and in particular the at least one constituent part of the at least one electrochemical cell can be ionised efficiently. Thereby, advantageously, the adduct ions are formed in a reaction volume of the ionisation source. Thus, advantageously, the ionisation source includes such a reaction volume. In a variant, however, the ionisation source goes without reaction volume and the adduct ions are not formed in a reaction volume of the ionisation source.

Advantageously, the reactant ions are one of I⁻, Br⁻, Cl⁻, CF₃O⁻, NO₃⁻, acetate-, NO⁺, NH₄⁺, amine⁺, acetone⁺, ethanol⁺, H₃O⁺ and benzene⁺. In a variant however, the reactant ions are other ions than I⁻, Br⁻, Cl⁻, CF₃O⁻, NO₃⁻, acetate⁻, NO⁺, NH₄⁺, amine⁺, acetone⁺, ethanol⁺, H₃O⁺ and benzene⁺.

In a first preferred variant, in the ionisation source and the ionisation method, the reactant ions are made available in the reaction volume, wherein for ionising the gas, the gas is introduced into the reaction volume to react with the reactant ions to form the adduct ions. This has the advantage that the gas can be ionised very efficiently.

In a second preferred variant, in the ionisation source and the ionisation method, compound ions formed from the reactant ions and another compound are made available in the reaction volume, wherein for ionising the gas, the gas is introduced into the reaction volume to react with the compound ions to form the adduct ions and one or more neutral byproducts. In case the reactant ions are likely to react with components of the gas which are not the at least one constituent part of the at least one electrochemical cell, the use of compound ions is advantageous because the compound ions can be tailored to react more likely with the compound ions to form the adduct ions and one or more neutral byproducts than the reactant ions are likely to react with components of the gas which are not the at least one constituent part of the at least one electrochemical cell. In order to achieve this, the reactant ions and the another compound are preferably chosen to provide a higher binding energy when binding together to the compound ions than a binding energy the reactant ions and the gas components of the gas not being the at least one component of the at least one electrochemical cell provide when binding together. Examples for such another compound are water, ethanol, methanol, benzene, acetone, acetonitrile (ACN), formic acid, lactic acid and nitric acid or is any other molecule containing an acid, peroxide, alcohol or ketone moiety.

Independent of whether in the ionisation source and the ionisation method, the reactant ions are made available in the reaction volume, wherein for ionising the gas, the gas is introduced into the reaction volume to react with the reactant ions to form the adduct ions, of whether compound ions formed from the reactant ions and another compound are made available in the reaction volume, wherein for ionising the gas, the gas is introduced into the reaction volume to react with the compound ions to form the adduct ions and one or more neutral byproducts, or whether the adduct ions are generated in another way, the reactant ions are advantageously ions of a reactant, wherein the reactant is advantageously chosen such that during ionisation of the gas in the ionisation source, adduct ions being adducts of the at least one constituent part of the at least one electrochemical cell and the reactant ions are formed in case the at least one constituent part of the at least one electrochemical cell is present in the gas. This has the advantage that an efficient determination of whether the gas includes the signature of the at least one constituent part of the at least one electrochemical cell or not is enabled.

Preferably, the reactant is chosen such that under the reaction conditions in the ionisation source, in particular in the reaction volume, during execution of the ionisation method, the adduct ions being the adducts of the at least one constituent part of the at least one electrochemical cell and the reactant ions are formed more than 1'000 times, preferably more than 10'000 times, particular preferably more than 100'000 times, most preferably more than 1'000'000 times, more likely than adduct ions being adducts of nitrogen and reactant ions, oxygen and reactant ions, water vapour and reactant ions, and argon and reactant ions are formed. This has the advantage that for determining on the basis of the analysis that the gas includes the signature of the at least one constituent part of the at least one electrochemical cell or not, a lower dynamic range for detecting amounts of ions having different values of the at least one physical property is sufficient because the main air components are considerably less likely to become ionised than the at least one constituent part of the at least one electrochemical cell.

In a preferred variant thereof, the reactant is chosen such that under the reaction conditions in the ionisation source, in particular in the reaction volume, during execution of the ionisation method, adduct ions being adducts of the at least one constituent part of the at least one electrochemical cell and the reactant ions are formed selectively in case the at least one constituent part of the at least one electrochemical cell is present in the gas, while no adduct ions being adducts of nitrogen and reactant ions, oxygen and reactant ions, water vapour and reactant ions, and argon and reactant ions are formed. This has the advantage that for determining on the basis of the analysis that the gas includes the signature of the at least one constituent part of the at least one electrochemical cell or not, an even lower dynamic range for detecting amounts of ions having different values of the at least one physical property is sufficient because the main air components are not ionised.

Advantageously, the reactant is chosen such that under the reaction conditions in the ionisation source, in particular in the reaction volume, during execution of the ionisation method, the adduct ions being the adducts of the at least one constituent part of the at least one electrochemical cell and the reactant ions are formed more than 10 times, preferably more than 100 times, particular preferably more than 1'000 times, more likely than adduct ions being adducts of carbon dioxide and reactant ions, neon and reactant ions, helium and reactant ions, methane and reactant ions, and krypton and reactant ions are formed. This has the advantage that for the minor components carbon dioxide, neon, helium, methane and krypton of air are less likely to become ionised than the at least one constituent part of the at least one electrochemical cell such that determining on the basis of the analysis that the gas includes the signature of the at least one constituent part of the at least one electrochemical cell or not is simplified.

In case the reactant is chosen such that under the reaction conditions in the ionisation source, in particular in the reaction volume, during execution of the ionisation method, the adduct ions being the adducts of the at least one constituent part of the at least one electrochemical cell and the reactant ions are formed more than 10'000 times more likely than adduct ions being adducts of nitrogen and reactant ions, oxygen and reactant ions, water vapour and reactant ions, and argon and reactant ions are formed, the reactant is advantageously chosen such that under the reaction conditions in the ionisation source, in particular in the reaction volume, during execution of the ionisation method, the adduct ions being the adducts of the at least one constituent part of the at least one electrochemical cell and the reactant ions are formed more than 10 times more likely than adduct ions being adducts of carbon dioxide and reactant ions, neon and reactant ions, helium and reactant ions, methane and reactant ions, and krypton and reactant ions are formed. In case the reactant is chosen such that under the reaction conditions in the ionisation source, in particular in the reaction volume, during execution of the ionisation method, the adduct ions being the adducts of the at least one constituent part of the at least one electrochemical cell and the reactant ions are formed more than 100'000 times more likely than adduct ions being adducts of nitrogen and reactant ions, oxygen and reactant ions, water vapour and reactant ions, and argon and reactant ions are formed, the reactant is advantageously chosen such that under the reaction conditions in the ionisation source, in particular in the reaction volume, during execution of the ionisation method, the adduct ions being the adducts of the at least one constituent part of the at least one electrochemical cell and the reactant ions are formed more than 100 times more likely than adduct ions being adducts of carbon dioxide and reactant ions, neon and reactant ions, helium and reactant ions, methane and reactant ions, and krypton and reactant ions are formed. In case the reactant is chosen such that under the reaction conditions in the ionisation source, in particular in the reaction volume, during execution of the ionisation method, the adduct ions being the adducts of the at least one constituent part of the at least one electrochemical cell and the reactant ions are formed more than 1'000'000 times more likely than adduct ions being adducts of nitrogen and reactant ions, oxygen and reactant ions, water vapour and reactant ions, and argon and reactant ions are formed, the reactant is advantageously chosen such that under the reaction conditions in the ionisation source, in particular in the reaction volume, during execution of the ionisation method, the adduct ions being the adducts of the at least one constituent part of the at least one electrochemical cell and the reactant ions are formed more than 1000 times more likely than adduct ions being adducts of carbon dioxide and reactant ions, neon and reactant ions, helium and reactant ions, methane and reactant ions, and krypton and reactant ions are formed.

Advantageously, the reactant is chosen such that under the reaction conditions in the ionisation source, in particular in the reaction volume, during execution of the ionisation method, adduct ions being adducts of the at least one constituent part of the at least one electrochemical cell and the reactant ions are formed selectively in case the at least one constituent part of the at least one electrochemical cell is present in the gas, while no adduct ions being adducts of carbon dioxide and reactant ions, neon and reactant ions, helium and reactant ions, methane and reactant ions, and krypton and reactant ions are formed. This has the advantage that for the minor components carbon dioxide, neon, helium, methane and krypton of air are not ionised such that determining on the basis of the analysis that the gas includes the signature of the at least one constituent part of the at least one electrochemical cell or not is considerably simplified.

In a preferred alternative variant to these variants where the ionisation source and the ionisation method rely on adduct ionisation, the ionisation source and the ionisation method rely on a charge carrier transfer being a proton or electron transfer, where a charge carrier being a proton or an electron is transferred to or from a reagent ion like for example an H₃O⁺, NO⁺, NH₄⁺ ion from or to a gas molecule or atom for ionising the respective gas molecule or atom.

Alternatively to the adduct ionisation and charge carrier transfer, the ionisation source and the ionisation method rely on a reaction of the gas with excited atoms or molecules.

Preferably, the analyser includes an ion mobility analyser and in the analysis method, the ions are separated in the ion mobility analyser according to their mobilities. Thus, one of the one or more physical properties is the mobility of the ions. This has the advantage that the ions can be analysed in an efficient and reliable manner for determining whether the gas includes the signature of the at least one constituent part of the at least one electrochemical cell.

Advantageously, the analyser includes a mass analyser and in the analysis method, the ions are separated in the mass analyser according to their mass to charge ratios. Thus, one of the one or more physical properties is the mass to charge ratio of the ions. This has the advantage that the ions can be analysed in an efficient and reliable manner for determining whether the gas includes the signature of the at least one constituent part of the at least one electrochemical cell.

In a preferred variant, the analyser includes an ion mobility analyser and a mass analyser, while in the analysis method, the ions are separated in the ion mobility analyser according to their mobilities and in the mass analyser according to their mass to charge ratios. In another variant, the analyser includes an ion mobility analyser but no mass analyser, while in the analysis method, the ions are separated in the ion mobility analyser according to their mobilities while they are not separated according to their mass to charge ratios. In yet another variant the analyser includes a mass analyser but no ion mobility analyser, while in the analysis method, the ions are separated in the mass analyser according to their mass to charge ratios while they are not separated according to their mobilities.

Alternatively to these variants, the analyser includes neither an ion mobility analyser nor a mass analyser, while in the analysis method, the ions are neither separated according to their mobilities nor according to their mass to charge ratios.

Advantageously, the at least one constituent part of the at least one electrochemical cell is an electrolyte of the at least one electrochemical cell. Since electrolytes of electrochemical cells are not common components of air, a leak in the battery enclosure can be detected efficiently by determining on the basis of the analysis of the gas whether the gas includes the signature of the electrolyte.

Alternatively, the at least one constituent part of the at least one electrochemical cell can be another constituent part of the at least one electrochemical cell than the electrolyte. For example the at least one constituent part of the at least one electrochemical cell can be an insulator of the at least one electrochemical cell.

Advantageously, the surrounding of the battery or the surrounding of the at least one electrochemical cell being in the battery enclosure separate from the battery enclosure, respectively, is at a gas pressure of at least 10'000 Pa, preferably at least 50'000 Pa, most preferably at least 90'000 Pa, when the gas, in particular the air, is obtained from the surrounding of the battery or the surrounding of the at least one electrochemical cell being in the battery enclosure separate from the battery enclosure, respectively. Thus, the battery is advantageously kept in an environment with a gas pressure of at least 10'000 Pa, preferably at least 50'000 Pa, most preferably at least 90'000 Pa, when the gas, in particular the air, is obtained from the surrounding of the battery, or, the at least one electrochemical cell is advantageously kept in an environment with a gas pressure of at least 10'000 Pa, preferably at least 50'000 Pa, most preferably at least 90'000 Pa, when the gas, in particular the air, is obtained from the surrounding of the at least one electrochemical cell. Consequently, in a particular preferred variant, the battery or the at least one electrochemical cell, respectively, is kept in atmospheric pressure when the gas, in particular air, is obtained from the surrounding of the battery or the at least one electrochemical cell, respectively. This is particular advantageous in case the method for detecting one or more leaks in the battery enclosure of a battery is used for examining newly produced batteries for leaks at a production line where batteries are produced. In a preferred variant, the surrounding of the battery is thus at a gas pressure of less than 200'000 Pa, particular preferably less than 150'000 Pa, when the gas, in particular the air, is obtained from the surrounding of the battery. Alternatively, however, the surrounding of the battery is at a gas pressure of 200'000 Pa or more, or less than 50'000 Pa, when the gas, in particular the air, is obtained from the surrounding of the battery. In the same sense, this is particular advantageous in the case the method for detecting one or more leaks in the at least one electrochemical cell being in the battery enclosure or separate from the battery enclosure is used for examining newly produced electrochemical cells for leaks at a production line where electrochemical cells are produced or before electrochemical cells are enclosed in battery enclosures during battery production. In a preferred variant, the surrounding of the at least one electrochemical cell is thus at a gas pressure of less than 200'000 Pa, particular preferably less than 150'000 Pa, when the gas, in particular the air, is obtained from the surrounding of the at least one electrochemical cell. Alternatively, however, the surrounding of the at least one electrochemical cell is at a gas pressure of 200'000 Pa or more, or less than 50'000 Pa, when the gas, in particular the air, is obtained from the surrounding of the at least one electrochemical cell.

Other advantageous embodiments and combinations of features come out from the detailed description below and the entirety of the claims.

### Brief description of the drawings

The drawings used to explain the embodiments show:

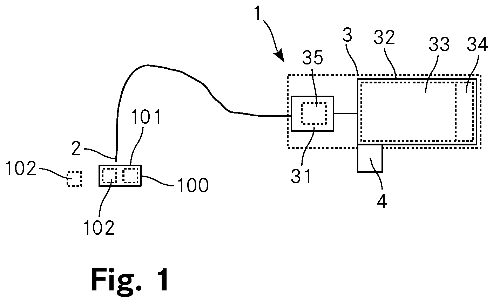

- Fig. 1: a simplified, schematic view of an apparatus for detecting one or more leaks in a battery enclosure of a battery or for detecting one or more leaks in an electrochemical cell with the method according to the invention.

In the figures, the same components are given the same reference symbols.

### Preferred embodiments

Figure 1 shows a simplified, schematic view of an apparatus 1 for detecting one or more leaks in a battery enclosure 101 of a battery 100 with the method according to the invention, wherein the battery 100 includes at least one electrochemical cell 102 enclosed in the battery enclosure 101, or detecting one or more leaks in at least one electrochemical cell 102 being in said battery enclosure 101 or separate from said battery enclosure 101. Thereby, the method according to the invention is explained in the context of the description of the apparatus 1.

The apparatus 1 shown in Figure 1 includes a tube with an inlet which forms a gas obtaining unit 2 for obtaining air and thus gas from a surrounding of the battery 100 or from the surrounding of the at least one electrochemical cell 102 being in the battery enclosure 101 or separate from the battery enclosure 101. For detecting the one or more leaks in the battery enclosure 101 of the battery 100, the apparatus 1 can suck the air from the surrounding of the battery 100 into the apparatus 1, while the tube with the inlet is moved along the surface of the battery enclosure 101. For detecting the one or more leaks in the at least one electrochemical cell 102 being in the battery enclosure 101 or separate from the battery enclosure 101, the apparatus 1 can suck the air from the surrounding of the at least one electrochemical cell 102 into the apparatus 1, while the tube with the inlet is moved along the surface of the at least one electrochemical cell 102.

Thereby, the surrounding of the battery 100 or the surrounding of the at least one electrochemical cell 102, respectively, is at an atmospheric pressure and thus at a gas pressure of about 100'000 Pa. In variants, however, the surrounding of the battery 100 or the surrounding of the at least one electrochemical cell 102, respectively, is at a reduced gas pressure like for example 10'000 Pa, 50'000 Pa or 90'000 Pa.

In order to analyse the air sucked in through the gas obtaining unit 2, the apparatus 1 includes an analysing entity 3 for obtaining an analysis of the gas by analysing the gas with an analysis method. This analysing entity 3 includes an ionisation source 31 for ionising the gas to ions with an ionisation method. Thereby, the ionisation source 31 is fluidly coupled to the gas obtaining unit 2 for receiving the gas obtained with the gas obtaining unit 2 from the surrounding of the battery 100 or the surrounding of the at least one electrochemical cell 102, respectively, for ionising the gas to the ions.

For analysing the ions obtained from the gas, the analysing entity 3 includes an analyser 32 which is fluidly coupled to the ionisation source 31 for receiving the ions from the ionisation source 31. Thereby, the ions are analysed in the analyser 32 by being separated according to one or more physical properties. More precisely, the analyser 32 includes an ion mobility analyser 33 and a mass analyser 34 for separating the ions in the ion mobility analyser 33 according to their mobilities and in the mass analyser 34 according to their mass to charge ratios. Thereby, the mass analyser 34 is configured as ion detector of the ion mobility analyser 201. In other words, the analyser 32 is an ion mobility spectrometer combined with a mass spectrometer. Such combined analysers are known in the art. With this analyser 32, in the analysis method, the gas is ionised by the ionisation source 31 with the ionisation method being a chemical ionisation method to the ions and the ions are analysed in the analyser 32 by being separated according to the one or more physical properties being their mobilities and their mass to charge ratios.

The apparatus 1 further includes a leak determination unit 4 adapted for determining on the basis of the analysis whether the gas includes a signature of at least one constituent part of the at least one electrochemical cell 102, the signature indicating a presence of the at least one constituent part of the at least one electrochemical cell 102 in the gas. In the present example, the at least one constituent part of the at least one electrochemical cell 102 is an electrolyte of the at least one electrochemical cell. Since electrolytes commonly don't occur in air, the detection of a signature of the electrolyte and thus the at least one constituent part of the electrochemical cell 102 in the gas obtained from the surrounding of the battery 100 is a good indicator for a leak in the battery enclosure 101, while the detection of a signature of the electrolyte and thus the at least one constituent part of the electrochemical cell 102 in the gas obtained from the surrounding of the at least one electrochemical cell 102 is a good indicator for a leak in the at least one electrochemical cell 102. For this reason, in case it is determined by the leak determination unit 4 on the basis of the analysis that the gas includes the signature of the at least one constituent part of the at least one electrochemical cell 102, a leak in the battery enclosure 101 of the battery 100 or a leak in the at least one electrochemical cell 102, respectively, is detected. Thereby, for determining on the basis of the analysis whether the gas includes the signature of the at least one constituent part of the at least one electrochemical cell 102, it is assessed by the leak determination module 4 whether a fraction of the ions have a same value of the one or more physical properties as ions obtained under the reaction conditions in the reaction volume 35 of the ionisation source 31, during execution of the ionisation method from the at least one constituent parts of the at least one electrochemical cell 102 have, wherein in case the fraction exceeds a threshold value, it is determined that the gas includes the signature of the at least one constituent part of the at least one electrochemical cell 102.

The ionisation source 31 is a chemical ionisation source and the ionisation method is a chemical ionisation method. Both the ionisation source 31 and the ionisation method rely on adduct ionisation where adduct ions are formed during ionisation of the gas, the adduct ions being adducts of the gas and reactant ions. Thereby, the ionisation source 31 includes a reaction volume 35 in which the adduct ions are formed. In a first variant, for ionising the gas, the gas is introduced into the reaction volume 35 to react with the reactant ions to form the adduct ions. In one example of this first variant, the reactant ions are I⁻. In other examples, the reactant ions are one of Br⁻, Cl⁻, CF₃O⁻, NO₃⁻, acetate-, NO⁺, NH₄⁺, amine⁺, acetone⁺, ethanol⁺, H₃O⁺ and benzene⁺. In yet other examples, other reactant ions are used. In a second variant, compound ions formed from the reactant ions and another compound are made available in the reaction volume 35, wherein for ionising the gas, the gas is introduced into the reaction volume 35 to react with the compound ions to form the adduct ions and one or more neutral byproducts. In an example, the compound ions are I⁻bound to acetonitrile. In this example, the compound ions are I(acetonitril)⁻ which can be written as I(C₂H₃N)⁻. In this case, the neutral byproduct formed during the ionisation of the gas besides the adduct ions is acetonitrile. In other examples, the compound ions are one of the above mentioned reactant ions combined with one of water, ethanol, methanol, benzene, acetone, formic acid, lactic acid and nitric acid or is any other molecule containing an acid, peroxide, alcohol or ketone moiety.

As mentioned, in the reaction volume 35, adduct ions are formed during ionisation of the gas, the adduct ions being adducts of the gas and reactant ions. Thereby, the gas is introduced into the reaction volume 35 to react either with the reactant ions to form the adduct ions or with compound ions formed from the reactant ions and another compound. In either case, the reactant ions are the ions of a reactant, wherein the reactant is chosen such that during ionisation of the gas in the ionisation source 31, adduct ions being adducts of the at least one constituent part of the at least one electrochemical cell 102 and the reactant ions are formed in case the at least one constituent part of the at least one electrochemical cell 102 is present in the gas.

Thereby, the reactant is chosen such that under the reaction conditions in the reaction volume 35 during execution of the ionisation method, adduct ions being adducts of the at least one constituent part of the at least one electrochemical cell 102 and the reactant ions are formed selectively in case the at least one constituent part of the at least one electrochemical cell 102 is present in the gas, while no adduct ions being adducts of nitrogen and reactant ions, oxygen and reactant ions, water vapour and reactant ions, and argon and reactant ions are formed. Furthermore, the reactant is chosen such that under the reaction conditions in the reaction volume 35 during execution of the ionisation method, the adduct ions being adducts of the at least one constituent part of the at least one electrochemical cell 102 and the reactant ions are formed selectively in case the at least one constituent part of the at least one electrochemical cell 102 is present in the gas, while no adduct ions being adducts of carbon dioxide and reactant ions, neon and reactant ions, helium and reactant ions, methane and reactant ions, and krypton and reactant ions are formed.

In a first variant, however, the reactant is chosen such that under the reaction conditions in the reaction volume 35 during execution of the ionisation method, the adduct ions being the adducts of the at least one constituent part of the at least one electrochemical cell 102 and the reactant ions are formed about 2'000 times more likely than adduct ions being adducts of nitrogen and reactant ions, oxygen and reactant ions, water vapour and reactant ions, and argon and reactant ions are formed. In a second variant, the reactant is chosen such that under the reaction conditions in the reaction volume 35 during execution of the ionisation method, the adduct ions being the adducts of the at least one constituent part of the at least one electrochemical cell 102 and the reactant ions are formed about 20'000 times more likely than adduct ions being adducts of nitrogen and reactant ions, oxygen and reactant ions, water vapour and reactant ions, and argon and reactant ions are formed. In a third variant, the reactant is chosen such that under the reaction conditions in the reaction volume 35 during execution of the ionisation method, the adduct ions being the adducts of the at least one constituent part of the at least one electrochemical cell 102 and the reactant ions are formed about 200'000 times more likely than adduct ions being adducts of nitrogen and reactant ions, oxygen and reactant ions, water vapour and reactant ions, and argon and reactant ions are formed.

In yet another variant, the reactant is chosen such that under the reaction conditions in the reaction volume 35 during execution of the ionisation method, the adduct ions being the adducts of the at least one constituent part of the at least one electrochemical cell 102 and the reactant ions are formed about 20 times more likely than adduct ions being adducts of carbon dioxide and reactant ions, neon and reactant ions, helium and reactant ions, methane and reactant ions, and krypton and reactant ions are formed. In yet another variant, the reactant is chosen such that under the reaction conditions in the reaction volume 35 during execution of the ionisation method, the adduct ions being the adducts of the at least one constituent part of the at least one electrochemical cell 102 and the reactant ions are formed about 200 times more likely than adduct ions being adducts of carbon dioxide and reactant ions, neon and reactant ions, helium and reactant ions, methane and reactant ions, and krypton and reactant ions are formed. In yet another variant, the reactant is chosen such that under the reaction conditions in the reaction volume 35 during execution of the ionisation method, the adduct ions being the adducts of the at least one constituent part of the at least one electrochemical cell 102 and the reactant ions are formed about 2'000 times more likely than adduct ions being adducts of carbon dioxide and reactant ions, neon and reactant ions, helium and reactant ions, methane and reactant ions, and krypton and reactant ions are formed.

In a variant, the the ionisation source and the ionisation method rely not on adduct ionisation but rely on a charge carrier transfer being a proton or electron transfer, where a charge carrier being a proton or an electron is transferred to or from a reagent ion like for example an H₃O⁺, NO⁺, NH₄⁺ ion from or to a gas molecule or atom for ionising the respective gas molecule or atom.

The invention is not limited to the method and the apparatus 1 described in the context of Figure 1. Rather, variants and variations of the method and the apparatus are readily available to the person skilled in the art.

In summary, it is to be noted that a method and an apparatus pertaining to the technical field initially mentioned are provided, that enable a fast and yet reliable detection of one or more leaks in a battery enclosure of a battery, the battery including at least one electrochemical cell enclosed in the battery enclosure.

## Claims

1. A method for detecting one or more leaks in a battery enclosure (101) of a battery (100), said battery (100) including at least one electrochemical cell (102) enclosed in said battery enclosure (101), or detecting one or more leaks in said at least one electrochemical cell (102) being in said battery enclosure (101) or separate from said battery enclosure (101), the method comprising the steps of
a) obtaining gas, in particular air, from a surrounding of said battery (100) or from a surrounding of said at least one electrochemical cell (102) being in said battery enclosure (101) or separate from said battery enclosure (101), respectively,
b) obtaining an analysis of said gas by analysing said gas with an analysis method and
c) determining on the basis of said analysis whether said gas includes a signature of at least one constituent part of said at least one electrochemical cell (102), said signature indicating a presence of said at least one constituent part of said at least one electrochemical cell (102) in said gas,
wherein, in case it is determined on the basis of said analysis that said gas includes said signature of said at least one constituent part of said at least one electrochemical cell (102), a leak in said battery enclosure (102) of said battery (100) or in said at least one electrochemical cell (102) being in said battery enclosure (101) or separate from said battery enclosure (101), respectively, is detected,
wherein in said analysis method, said gas is ionised by an ionisation source (31) with an ionisation method to ions and said ions are analysed in an analyser (32) by being separated according to one or more physical properties, wherein said ionisation source (31) is a chemical ionisation source and said ionisation method is a chemical ionisation method.

2. The method according to claim 1, **characterised in that** for determining on the basis of said analysis whether said gas includes said signature of said at least one constituent part of said at least one electrochemical cell (102), it is assessed whether a fraction of said ions have a same value of said one or more physical properties as ions obtained under the reaction conditions in said ionisation source (31) during execution of said ionisation method from the at least one constituent parts of the at least one electrochemical cell (102) have, wherein in case said fraction exceeds a threshold value, it is determined that said gas includes said signature of said at least one constituent part of said at least one electrochemical cell (102).

3. The method according to claim 1 or 2, **characterised in that** said ionisation source (31) and said ionisation method rely on adduct ionisation where adduct ions are formed during ionisation of said gas, said adduct ions being adducts of said gas and reactant ions.

4. The method according to claim 3, **characterised in that** in said ionisation source (31) and said ionisation method, said reactant ions are made available in a reaction volume (35), wherein for ionising said gas, said gas is introduced into said reaction volume (35) to react with said reactant ions to form said adduct ions.

5. The method according to claim 3, **characterised in that** in said ionisation source (31) and said ionisation method, compound ions formed from said reactant ions and another compound are made available in a reaction volume (35), wherein for ionising said gas, said gas is introduced into said reaction volume (35) to react with said compound ions to form said adduct ions and one or more neutral byproducts.

6. The method according to one of claims 3 to 5, **characterised in that** said reactant ions are ions of a reactant, wherein said reactant is chosen such that during ionisation of said gas in said ionisation source (35), adduct ions being adducts of said at least one constituent part of said at least one electrochemical cell (102) and said reactant ions are formed in case said at least one constituent part of said at least one electrochemical cell (102) is present in said gas.

7. The method according to claim 6, **characterised in that** said reactant is chosen such that under the reaction conditions in said ionisation source (31) during execution of said ionisation method, said adduct ions being said adducts of said at least one constituent part of said at least one electrochemical cell (102) and said reactant ions are formed more than 1'000 times, preferably more than 10'000 times, particular preferably more than 100'000 times, most preferably more than 1'000'000 times, more likely than adduct ions being adducts of nitrogen and reactant ions, oxygen and reactant ions, water vapour and reactant ions, and argon and reactant ions are formed.

8. The method according to claim 7, **characterised in that** said reactant is chosen such that under the reaction conditions in said ionisation source (31) during execution of said ionisation method, adduct ions being adducts of said at least one constituent part of said at least one electrochemical cell (102) and said reactant ions are formed selectively in case said at least one constituent part of said at least one electrochemical cell (102) is present in said gas, while no adduct ions being adducts of nitrogen and reactant ions, oxygen and reactant ions, water vapour and reactant ions, and argon and reactant ions are formed.

9. The method according to one of claims 6 to 8, **characterised in that** said reactant is chosen such that under the reaction conditions in said ionisation source (31) during execution of said ionisation method, said adduct ions being said adducts of said at least one constituent part of said at least one electrochemical cell (102) and said reactant ions are formed more than 10 times, preferably more than 100 times, particular preferably more than 1'000 times, more likely than adduct ions being adducts of carbon dioxide and reactant ions, neon and reactant ions, helium and reactant ions, methane and reactant ions, and krypton and reactant ions are formed.

10. The method according to claim 9, **characterised in that** said reactant is chosen such that under the reaction conditions in said ionisation source (31) during execution of said ionisation method, adduct ions being adducts of said at least one constituent part of said at least one electrochemical cell (102) and said reactant ions are formed selectively in case said at least one constituent part of said at least one electrochemical cell (102) is present in said gas, while no adduct ions being adducts of carbon dioxide and reactant ions, neon and reactant ions, helium and reactant ions, methane and reactant ions, and krypton and reactant ions are formed.

11. The method according to one of claims 1 to 10, **characterised in that** said analyser (32) includes an ion mobility analyser and **in that** in said analysis method, said ions are separated in said ion mobility analyser according to their mobilities.

12. The method according to one of claims 1 or 11, **characterised in that** said analyser (32) includes a mass analyser and **in that** in said analysis method, said ions are separated in said mass analyser according to their mass to charge ratios.

13. The method according to one of claims 1 to 12, **characterised in that** said at least one constituent part of said at least one electrochemical cell (102) is an electrolyte of said at least one electrochemical cell (102).

14. The method according to one of claims 1 to 13, **characterised in that** said surrounding of said battery (100) or said surrounding of said at least one electrochemical cell (102) being in said battery enclosure (101) separate from said battery enclosure (101), respectively, is at a gas pressure of at least 10'000 Pa, preferably at least 50'000 Pa, most preferably at least 90'000 Pa, when said gas, in particular said air, is obtained from said surrounding of said battery (100) or said surrounding of said at least one electrochemical cell (102) being in said battery enclosure (101) separate from said battery enclosure (101), respectively.

15. An apparatus (1) for detecting one or more leaks in a battery enclosure (101) of a battery (100), said battery (100) including at least one electrochemical cell (102) enclosed in said battery enclosure (101), or detecting one or more leaks in at least one electrochemical cell (102) being in said battery enclosure (101) or separate from said battery enclosure (101) with the method according to one of claims 1 to 14, said apparatus (1) including
a) a gas obtaining unit (2) for obtaining gas, in particular air, from a surrounding of said battery (100) or a surrounding of said at least one electrochemical cell (102) being in said battery enclosure (101) or separate from said battery enclosure (101), respectively, and
b) an analysing entity (3) for obtaining an analysis of said gas by analysing said gas with an analysis method,
wherein said analysing entity (3) includes an ionisation source (31) for ionising said gas to ions with an ionisation method, wherein said ionisation source (31) is a chemical ionisation source and said ionisation method is a chemical ionisation method, wherein said ionisation source (31) is fluidly coupled to said gas obtaining unit (2) for receiving said gas obtained with said gas obtaining unit (2) from said surrounding of said battery (100) or said surrounding of said at least one electrochemical cell (102) being in said battery enclosure (101) or separate from said battery enclosure (101) for ionising said gas to said ions,
wherein said analysing entity (3) includes an analyser (32) for analysing said ions by separating said ions according to one or more physical properties, wherein said analyser (32) is fluidly coupled to said ionisation source (31) for receiving said ions from said ionisation source (31) for separating said ions according to said one or more physical properties,
wherein in said analysis method, said gas is ionised by said ionisation source (31) with said ionisation method to said ions and said ions are analysed in said analyser (32) by being separated according to said one or more physical properties, wherein said apparatus (1) further includes
c) a leak determination unit (4) adapted for determining on the basis of said analysis whether said gas includes a signature of at least one constituent part of said at least one electrochemical cell (102), said signature indicating a presence of said at least one constituent part of said at least one electrochemical cell (102) in said gas, wherein in case it is determined by said leak determination unit (4) on the basis of the analysis that said gas includes said signature of said at least one constituent part of said at least one electrochemical cell (102), a leak in said battery enclosure (101) of said battery (100) or in said at least one electrochemical cell (102) being in said battery enclosure (101) separate from said battery enclosure (101) is detected.
